# EUROPEAN PATENT SPECIFICATION

(11) **EP 2 306 666 B1**
(45) Date of publication and mention of the grant of the patent: **01.05.2013**
(21) Application number: 09305919.4
(22) Date of filing: 30.09.2009
(51) Int. Cl.: H04L 1/18

(54) **Reduction of frame error rate in a node of a wireless packet-switched communication network**
Verringerung der Rahmenfehlerrate in einem Knoten eines drahtlosen Paketvermittlungskommunikationsnetzes
Réduction du taux d'erreur de trame dans un noeud de réseau de communication sans fil commuté par paquets

(43) Date of publication of application: 06.04.2011
(73) Proprietor: Alcatel Lucent, 75007 Paris (FR)
(72) Inventor: Barzaghi, Giorgio, 20056, GREZZAGO (IT); De Blasio, Giuseppe, 00135, ROMA (IT); Pasotti, Marco, 25067, LUMEZZANE (IT); Vodola, Francesco, 20038, SEREGNO (IT); Blondel, Thomas, 78141, VELIZY (FR)
(74) Representative: Wetzel, Emmanuelle

(56) References cited:
- US-A1- 2003 128 681
- US-A1- 2004 160 957
- US-A1- 2007 263 631
- DZMITRY KLIAZOVICH ET AL: "DAWL: A Delayed-ACK Scheme for MAC-Level Performance Enhancement of Wireless LANs" MOBILE NETWORKS AND APPLICATIONS, KLUWER ACADEMIC PUBLISHERS, BO, vol. 10, no. 5, 1 October 2005 (2005-10-01), pages 607-615, XP019213695 ISSN: 1572-8153

## Description

### Technical Field

The present invention generally relates to the field of wireless communication networks.

### Background Art

In a wireless communications network, nodes are usually provided with an indoor unit (IDU) and an outdoor unit (ODU). The ODU basically is the radio equipment of the node, while the IDU interfaces the ODU with terminals, PBX, routers, switches, etc.

Packet-switched wireless communication networks are known. In these networks, the link between the IDU and the ODU is typically an Ethernet link physically realized by means of twisted pair cables or optical fiber cables.

The performance of the Ethernet link is typically measured in terms of Bit Error Rate (BER), which is the ratio between the number of received erroneous bits and the total number of transmitted bits. The BER is related to the characteristics of the physical medium used to implement the Ethernet link. Typically, 1000BASE-T Ethernet (i.e. Ethernet over twisted pair cables) and 1000BASE-X Ethernet (i.e. Ethernet over fiber optic cables) exhibit a BER of 10⁻¹⁰ and 10⁻¹², respectively.

In transmission over an Ethernet link, when one or more erroneous bits are detected in a frame at the reception side, the whole frame is discarded. As it is known, the Frame Error Rate (FER) is defined as the ratio between the number of discarded frames and the total number of transmitted frames. FER is typically two or more orders of magnitude lower than BER.

Packet-switched wireless communication networks may support the delivery of traffic flows carrying different services, each service being associated to one or more Classes of Service (CoS). In particular, both data services and real-time services may be supported. Examples of real-time services are Circuit Emulation Services (CES), which allow to transport TDM (Time Division Multiplexing) traffic flows over an Ethernet link.

The delivery of services like CES requires a predefined maximum FER on the Ethernet link between IDU and ODU. However, this predefined maximum FER is typically much lower than those typically achieved by the above mentioned standard Ethernet links.

It is known that, in order to lower the FER of a link, error control mechanisms can be provided at the Logical Link Control (LLC) layer of the OSI model or at higher layers, such as the transport layer of the OSI model. An example of a transport layer protocol supporting an error control mechanism is the TCP (Transmission Control Protocol) of the IP suite. These error control mechanisms usually imply retransmission of lost or discarded frames upon detection at the receiving side that a frame has not been received or that a frame contains an error.

US 2003/0128681 A1 discloses a fixed wireless communication system implementing ARQ utilizing a demand access MAC, such as DOCSIS, and variable length PDUs, such as Ethernet packets, in messages between a base station and CPE. The base station inserts a sequence number into each PDU. The sequence numbers are members of a series, adjacent ones differing by the same factor. The CPE determines if any sequence number/s is/are missing from the packets of a received message, indicating a failure to receive their associated packets. The missing sequence numbers are included in a message back to the base station, which uses them to re-send the missing packets.

US 2004/0160957 A1 discloses systems that are provided for sequencing, delivery acknowledgement, and throttling of data packets over a network layer, such as UDP and SMS. To support devices with limited battery resources, the invention incorporates asymmetric retry logic and/or acknowledgements with overlapping ranges, to minimize the transmissions required for the device. The sender of a data-bearing frame does not need to wait for a frame to b acknowledged before sending the next, such that many frames can be "in flight" at once.

US 2007/0263631 A1 discloses that, in a frame-switched network, a sender sends frames to a receiver over a possibly unreliable channel. Sent frames include frame identifiers that can be used for a limited automatic repeat request. Upon receipt of a frame, the receiver determines, from the frame identifier, if frames prior to the received frame were lost in transit. If the receiver determines that it missed a prior frame, the receiver sends the sender a negative acknowledgement (nack) for the missed prior frame or frames. Otherwise, if the receiver receives a frame correctly, it does not acknowledge the frame. The frame identifiers can be a set of sequential integers with frames transmitted in sequential frame order.

### Summary of the invention

The inventors have noticed that the known error control mechanisms mentioned above, being implemented at the LLC layer or at the transport layer of the OSI model, imply adding a fixed overhead to each Ethernet frame. Indeed, such error control mechanisms require addition of one or more dedicated fields in the LLC layer header or in the transport layer header. In particular, a sequence number should be added in the LLC layer header or in the transport layer header and, optionally, other predefined fields. This way, at MAC layer (i.e. the layer of Ethernet), the payload of the Ethernet frames disadvantageously includes (in addition to user traffic) a number of bytes that have been added at higher layers for implementing the error control mechanism. This disadvantageously results in an increased length of the frame, thereby causing a less efficient use of the available bandwidth over the Ethernet link.

Moreover, the above known error control mechanisms are not service-aware or CoS-aware. This implies that every frame that is not correctly received must be retransmitted, irrespective of the service/CoS of the traffic flow the frame belongs to. Nevertheless, as mentioned above, only certain types of services, like CES, require a lower FER over the Ethernet link. Therefore the known error control mechanisms may cause, disadvantageously, a further waste of the available bandwidth on the Ethernet link, since they needlessly provide retransmission also of frames carrying services that do not require lower FER.

Accordingly, the inventors have addressed the problem of providing a method for reducing the frame error rate between IDU and ODU of a node of a wireless packet-switched communication network which overcomes the aforesaid drawbacks.

In particular, the inventors have addressed the problem of reducing the frame error rate between IDU and ODU of a node of a wireless packet-switched communication network with a reduced overhead of the frames transmitted along the link in comparison with the above known mechanisms, thereby allowing a more efficient use of the bandwidth available on the link.

In the following description and in the claims, the expression "interface located at a medium access control layer" will designate an interface configured to perform only functions pertaining to the medium access control (MAC) layer and lower layers (i.e. the physical layer) of the OSI model.

According to some embodiments of the present invention there is provided a method for reducing the frame error rate on an Ethernet link between a first unit and a second unit of a node of a wireless packet-switched communication network, the first unit comprising a first interface and the second unit comprising a second interface, the first interface and the second interface being Ethernet interfaces, the method comprising:
a) at the first interface, associating a sequence number to a frame and transmitting the frame with the sequence number over the link to the second interface, the sequence number being indicative of a position of the frame in a sequence of frames transmitted over the link;
b) at the second interface, receiving the frame, reading the sequence number, using the sequence number for determining whether a frame is missing from the sequence of frames and, in the affirmative, requesting to the first interface retransmission of the missing frame; and
c) at the first interface, retransmitting the missing frame,
the method being characterized in that associating comprises writing the sequence number in one or more of the following positions: in a media access control layer header of the frame, in an inter-frame gap between the frame and an immediately preceding frame of the sequence of frames.

Preferably, step a) comprises storing at least one frame of the sequence of frames in a buffer before transmission.

Preferably, step a) comprises determining a service carried by and/or a class of service associated to a frame of the sequence of frames and storing at least one frame of the sequence of frames if the at least one frame carries a predefined service and/or is associated to a predefined class of service.

Preferably, using of the sequence number comprises comparing the sequence number associated to the frame with a further sequence number associated to a previously received frame thus determining whether a sequence number is missing between the sequence number and the further sequence number.

Preferably, requesting retransmission of the missing frame comprises transmitting to the first interface a message containing the missing sequence number.

Preferably, retransmitting the missing frame comprises checking whether the at least one frame stored in the buffer has associated a sequence number equal to the missing sequence number and, in the affirmative, retrieving a copy of the at least one frame from the buffer.

Preferably, retransmitting the missing frame comprises associating to the copy a new sequence number indicating the position that the copy will occupy, when it will be retransmitted, in a further sequence of frames to be transmitted over the link.

Preferably, step a) further comprises calculating a checksum of the sequence number, and using of the sequence number comprises processing the checksum for checking whether the sequence number is error-free and, in the negative, discarding the frame.

Preferably, step a) comprises, after transmitting the frame, determining whether further frames carrying user traffic have to be transmitted and, in the negative, generating an idle frame, associating a still further sequence number to the idle frame and transmitting the idle frame with the still further sequence number to the second interface.

According to some embodiments of the present invention there is provided a transmitting unit suitable for transmitting frames to a receiving unit on an Ethernet link at a node of a wireless packet-switched communication network, the transmitting unit comprising a transmitting interface, the transmitting interface being an Ethernet interface and comprising a sequence number processor and a transmitter, wherein:
- the sequence number processor is configured to associate a sequence number to a frame, the sequence number being indicative of a position of the frame in a sequence of frames transmitted over the link;
- the transmitter is configured to transmit the frame with the sequence number over the link to the receiving unit;
- the sequence number processor is configured to receive from the receiving unit a request to retransmit a missing frame; and
- the transmitter is configured to retransmit the missing frame,
the transmitting unit being characterized in that the sequence number processor is configured to write the sequence number in one or more of the following positions: in a media access control layer header of the frame, in an inter-frame gap between the frame and an immediately preceding frame of the sequence of frames.

According to some embodiments of the present invention there is provided a receiving unit suitable for receiving frames from a transmitting unit on an Ethernet link at a node of a wireless packet-switched communication network, the receiving unit comprising a receiving interface, the receiving interface being an Ethernet interface and comprising a receiver and a sequence number processor, wherein:
- the receiver is configured to receive a frame with an associated sequence number, the sequence number being indicative of a position of the frame in a sequence of frames transmitted over the link;
- the sequence number processor is configured to read the sequence number, using the sequence number for determining whether a frame is missing from the sequence of frames and, in the affirmative, requesting to the transmitting unit retransmission of the missing frame,
the receiving unit being characterized in that the sequence number processor is configured to read the sequence number from one or more of the following positions: in a media access control layer header of the frame, in an inter-frame gap between the frame and an immediately preceding frame of the sequence of frames.

According to some embodiments of the present invention there is provided a node for a packet-switched wireless network comprising a transmitting unit and a receiving unit as set forth above.

According to some embodiments of the present invention there is provided a packet-switched wireless network comprising a node as set forth above.

### Brief description of the drawings

Embodiments of the invention will be better understood by reading the following detailed description, given by way of example and not of limitation, to be read with reference to the accompanying drawings, wherein:
- Figure 1 schematically shows a portion of a node of a wireless packet-switched communication network;
- Figure 2 shows in more detail the structure of an interface of Figure 1, according to an embodiment of the present invention;
- Figures 3, 4 and 5 show flow charts illustrating steps of the method according to an embodiment of the present invention; and
- Figures 6 and 7 show a sequence of transmitted frames and a sequence of frames containing a retransmitted frame, according to an embodiment of the present invention, respectively.

### Detailed description of preferred embodiments of the invention

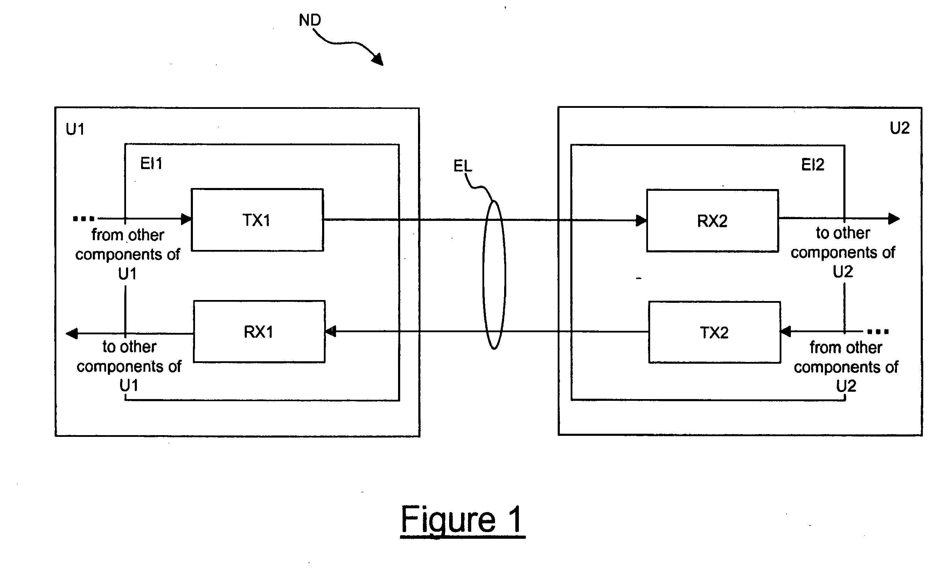

Figure 1 schematically shows a portion of a node ND of a wireless packet-switched communication network (not shown) comprising a first unit U1 and a second unit U2. Preferably, the first unit U1 is an indoor unit (IDU) and the second unit U2 is an outdoor unit (ODU).

The first unit U1 comprises a first interface EI1, the second unit U2 comprises a second interface EI2, and a link EL connects the first interface EI1 and the second interface EI2. Preferably, the first interface EI1 and the second interface EI2 are located at MAC layer. More preferably, the first interface EI1 and the second interface EI2 are Ethernet interfaces, while the link EL is an Ethernet link. Other modules, components or devices, possibly located at layers higher than the MAC layer (namely, LLC layer) comprised in the first unit U1 and in the second unit U2 are not shown in Figure 1, since they are not relevant for the present description.

The link EL is preferably a packet-switched bi-directional link suitable for carrying frames exchanged between the first interface EI1 and the second interface EI2. In case the interfaces EI1 and EI2 are Ethernet interfaces, the exchanged frames are Ethernet frames. Each frame preferably comprises a MAC header, a payload and a frame check sequence. In case of Ethernet frames, the MAC header comprises a preamble, a start-of-frame delimiter field, a destination address field, a source address field and a Length/Type field. Consecutively transmitted frames are preferably separated by a so-called inter-frame gap. The frames transmitted over the link EL are preferably distributed in a number of traffic flows. Each traffic flow (and therefore, each frame belonging thereto) may carry a service, each service being associated to one ore more Classes of Service (CoS).

The first interface EI1 comprises a first transmitting module TX1 and a first receiving module RX1. The second interface EI2 comprises a second transmitting module TX2 and a second receiving module RX2.

Considering first the direction from the first unit U1 and the second unit U2 of the node, the first transmitting module TX1 is suitable for receiving frames (coming from terminals, PBX, routers, switches, etc.) from other components of the first unit U1, not shown in Figure 1, processing them and transmitting them to the second interface EI2 through the link EL. The second receiving module RX2 is suitable for receiving and processing the frames transmitted by the first transmitting module TX1 and for passing them to other components of the second unit U2, not shown in Figure 1, which are in charge of forwarding them to a further node of the wireless packet-switched communication network by means of a point-to-point wireless connection (not shown).

Considering the direction from the second unit U2 to the first unit U1 of the node, the second transmitting module TX2 is suitable for receiving frames (coming from the further node of the wireless packet-switched communication network by means of the point-to-point wireless connection) from other components of the second unit U2, not shown in Figure 1, processing the received frames and transmitting them to the first interface EI1 through the link EL. The first receiving module RX1 is suitable for receiving and processing the frames transmitted by the second transmitting module TX2 and passing them to other modules of the first unit U1, not shown in Figure 1, which are in charge of transmitting them to terminals, PBX, routers, switches, etc.

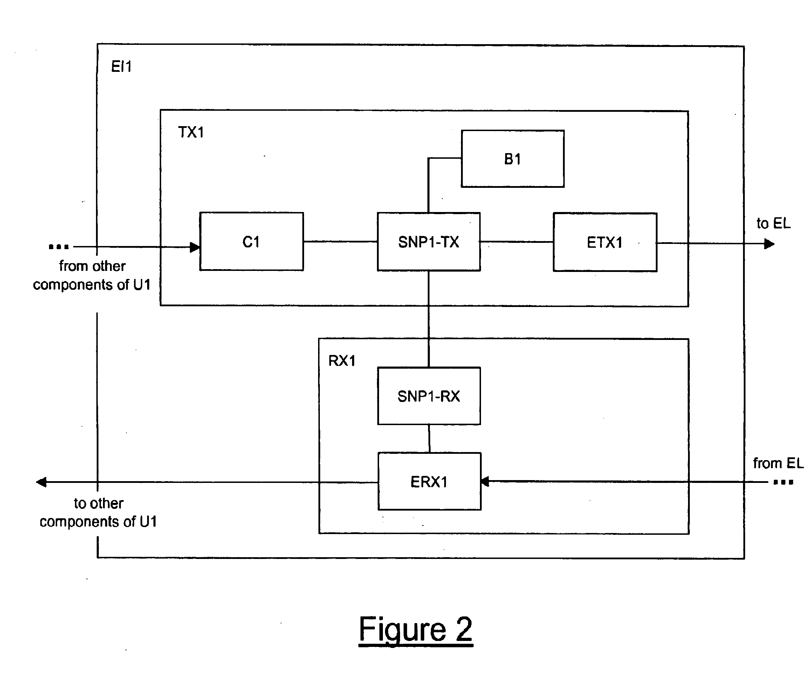

Figure 2 schematically shows in greater detail the structure of the first interface EI1.

According to a preferred embodiment of the invention, the first transmitting module TX1 of the first interface EI1 comprises a classifier C1, a sequence number processor SNP1-TX, a buffer B1 and a transmitter ETX1. The classifier C1 and the sequence number processor SNP1-TX may be implemented via software, via hardware or a combination of hardware and software. The classifier C1, the sequence number processor SNP1-TX and the transmitter ETX1 are connected according to a cascaded configuration. The buffer B1 is preferably a circular buffer, and is connected to the sequence number processor SNP1-TX.

The classifier C1 is suitable for reading in each received frame (namely, in the frame MAC header) the value of one or more fields (e.g. VLAN tag, 802.1 p bits, MPLS label, EXP bits, ethertype, or non-standard fields), indicative of the service carried by that frame and/or the CoS associated to that frame. Depending on the value of the read field(s) inside the frame (or frame header), the classifier C1 is suitable for determining the service carried by each frame and/or the CoS associated to each frame and for determining accordingly whether each frame should be provided with a retransmission mechanism. Preferably, the classifier C1 is configured to determine that only frames belonging to traffic flows carrying real-time services or associated to higher CoS should be provided with a retransmission mechanism.

The sequence number processor SNP1-TX is preferably suitable for associating a sequence number SN to each frame. As it will be described in further detail herein after, the sequence number SN preferably indicates the order according to which the frames are transmitted over the link EL by the transmitter ETX1. According to first advantageous variants, the sequence number processor SNP1-TX is configured to insert the sequence number SN associated to a frame in an inter-frame gap between the frame and the preceding one. According to second advantageous variants, the sequence number processor SNP1-TX is configured to write the sequence number SN associated to a given frame in one or more bytes of the MAC header. More particularly, the sequence number SN may be written in the preamble of the frame header or immediately after a start-of-frame delimiter field of the frame header. In this latter case, the size of the inter-frame gap is correspondingly reduced. Advantageously, writing the sequence number SN in the preamble, in the inter-frame gap or immediately after the start-of-frame delimiter field allows saving bandwidth of the link EL, since it does not imply using bytes of the frame payload.

Optionally, the sequence number processor SNP1-TX is further configured to calculate a checksum (e.g. a Cyclic Redundancy Check code) of each sequence number SN. The checksum is preferably written in a few bits next to the bits where the sequence number SN is written, i.e., according to the above advantageous variants, in the frame preamble, in the inter-frame gap or immediately after the start-of-frame delimiter field of the frame. The checksum is suitable for being used at the reception side to verify the integrity of the sequence number SN, as it will be described in detail herein after.

The sequence number processor SNP1-TX is further configured to store in the buffer B1 the frames that should be provided with a retransmission mechanism, according to instructions received from the classifier C1. To this purpose, the classifier C1 is preferably further configured to generate, for each frame, an instruction specifying whether the frame, together with its respective sequence number SN (and, possibly, its checksum), has to be stored in the buffer B1. In particular, if the frame should be provided with a retransmission mechanism, the instruction specifies that the frame has to be stored in the buffer B1. Otherwise, the instruction specifies that the frame has not to be stored in the buffer B1. The sequence number processor SNP1-TX is preferably further configured to receive each frame and the respective instruction from the classifier C1, and read the instruction. If the instruction specifies that the frame has to be stored in the buffer B1, the sequence number processor SNP1-TX is then suitable to forward the frame to the buffer B1.

The transmitter ETX1 is suitable for transmitting the frames over the link EL.

According to preferred embodiments of the present invention, the first receiving module RX1 of the first interface EI1 comprises a receiver ERX1 and a sequence number processor SNP1-RX connected to the receiver ERX1. The sequence number processor SNP1-RX is also connected to the sequence number processor SNP1-TX for reasons which will be explained in the following.

The receiver ERX1 is suitable for receiving the frames from the link EL. Besides, the sequence number processor SNP1-RX is suitable for reading the sequence number SN associated to each received frame and to determine, according to the sequence of read sequence numbers, whether one or more frames are missing in the sequence of received frames.

Preferably, the structure of the second interface EI2 is substantially the same as the structure of the first interface EI1 described above and shown in Figure 2. A detailed description will therefore not be repeated.

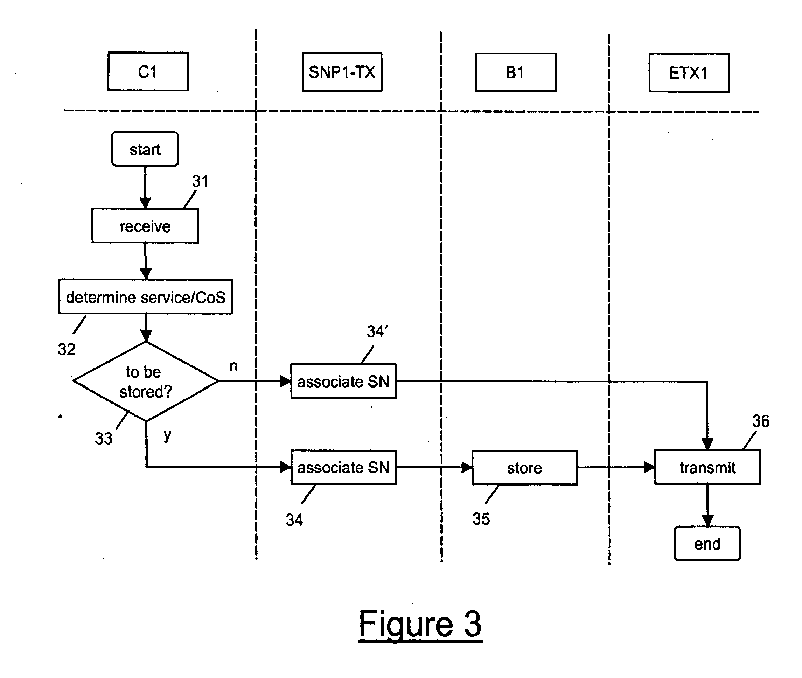

The method for reducing the frame error rate over the link EL according to a preferred embodiment of the present invention will be now described in detail, referring to the flow charts of Figures 3 to 5. Herein after, reference will be made to the components of the first interface EI1 (that have been described above in detail) and to the components of the second interface EI2. The components of the second interface EI2 will be referred to using the same reference signs of the corresponding components in the first interface EI1, in which the index "1" is replaced by the index "2" (classifier C2, transmitter ETX2, buffer B2, and so on).

In an operative situation, the interfaces EI1 and EI2 are exchanging frames through the bi-directional link EL. For sake of clarity, the method will be described only with reference to the transmission of frames from the first interface EI1 towards the second interface EI2.

Figure 3 schematically shows a flow chart illustrating the operation of the first interface EI1 when transmitting frames to the second interface EI2, according to a preferred embodiment of the present invention. In particular, the operation of the first transmitting module TX1 on each frame is considered.

At a first step 31, the classifier C1 receives a frame from a further module of the first unit U1. The operation of this further module will not be described, since it is not relevant to the present description. The classifier C1 preferably reads in the header of the received frame (step 32) the value of one or more fields (e.g. VLAN tag, 802.1p bits, MPLS label, EXP bits, ethertype, non standard fields) indicative of the service carried by the frame and/or the CoS associated to the frame. Depending on the value of the read field(s), during step 32 the classifier C1 determines the service carried by the frame and/or CoS associated to it and, during step 33, determines accordingly whether the frame should be provided with a retransmission mechanism. Preferably, if the frame belongs to a traffic flow carrying real-time services or associated to higher CoS, the classifier C1 determines that it should be provided with a retransmission mechanism. If the frame should be provided with a retransmission mechanism, the classifier C1 generates an instruction specifying that the frame has to be stored in the buffer B1 (step not shown in Figure 3). Otherwise, the classifier C1 generates an instruction specifying that the frame has not to be stored in the buffer B1 (step not shown in Figure 3).

Next, the classifier C1 forwards the frame and the respective instruction to the sequence number processor SNP1-TX (step not shown).

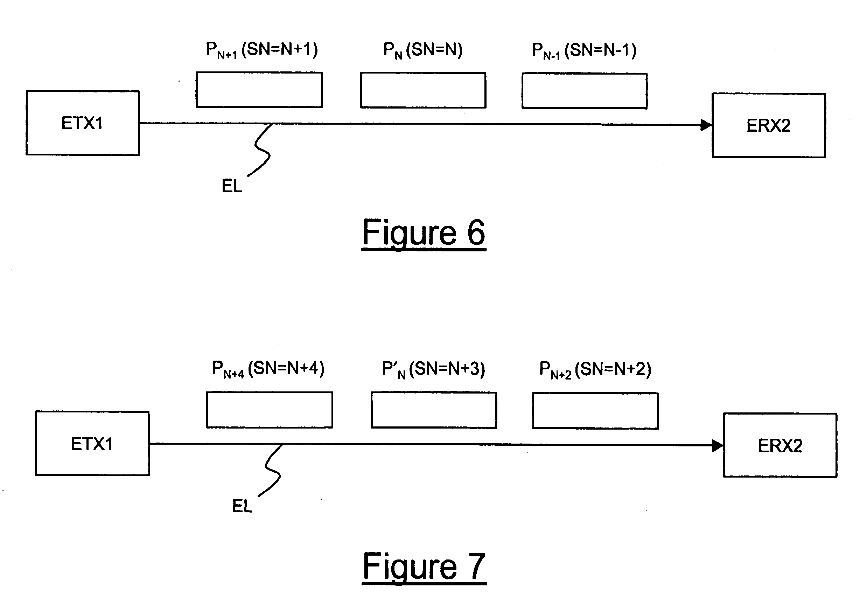

The sequence number processor SNP1-TX then associates (step 34 or 34') a sequence number SN to the frame, the value of the sequence number SN indicating the position of the frame in the sequence of frames to be transmitted over the link EL. Preferably, each time the sequence number processor SNP1-TX performs step 34 or 34' (i.e. each time a frame is processed by the sequence number processor SNP1-TX), the value of the sequence number SN is increased by a fixed value, for example 1. Accordingly, the sequence number SN associated to each frame to be transmitted is equal to the sequence number SN of the frame transmitted immediately before, increased by the fixed value, for example 1. For example, Figure 6 schematically shows three consecutive frames P_{N-1}, P_{N} and P_{N+1}. The frame P_{N-1} is the first frame to be transmitted, then the frame P_{N} should be transmitted and then the frame P_{N+1} should be transmitted. The three consecutive frames P_{N-1}, P_{N} and P_{N+1} have associated respective sequence numbers SN whose values are N-1, N and N+1 (N being an integer equal to or higher than 1), respectively.

Optionally, at steps 34 and 34', the sequence number processor SNP1-TX preferably calculates a checksum of the sequence number SN. Moreover, preferably, the sequence number processor SNP1-TX reads the instruction received from the classifier C1 (step not shown). If the instruction specifies that the frame is to be stored in the buffer B1, the sequence number processor SNP1-TX forwards the frame, together with its respective sequence number SN (and possibly its checksum), to the buffer B1 (step 35). Substantially at the same time, the sequence number processor SNP1-TX forwards the frame also to the transmitter ETX1, which transmits it (step 36) over the link EL. If the instruction specifies that the frame is not to be stored in buffer B1, the frame is not forwarded to the buffer B1, but it is forwarded only to the transmitter ETX1, which transmits it (step 36) over the link EL.

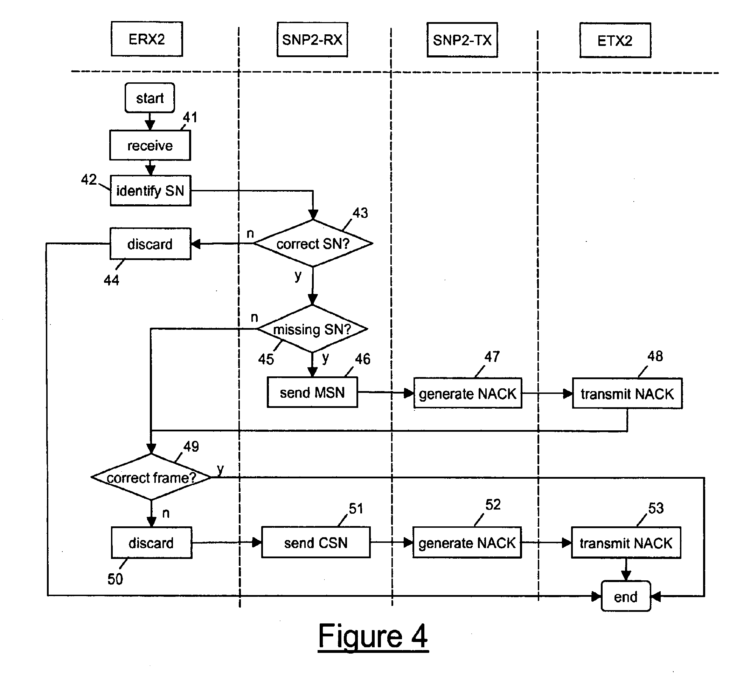

Figure 4 schematically shows a flow chart illustrating the operation of the second interface EI2 when it receives frames from the first interface EI1, according to a preferred embodiment of the present invention. In particular, the operation of the second receiving module RX2 on each frame is considered.

At step 41, the receiver ERX2 receives, from the link EL, a frame and the sequence number SN associated to it, optionally together with its checksum. In particular, the receiver ERX2 sequentially receives the bytes of the frame with the associated sequence number SN. As soon as the receiver identifies the sequence number SN (step 42), it preferably forwards it (optionally with its checksum) to the sequence number processor SNP2-RX. More particularly, in case the sequence number SN (optionally with its checksum) is in the inter-frame gap, the sequence number SN is received at the receiver ERX2 before the frame. Besides, in case the sequence number SN (with its checksum) is in the frame header (in particular, in the preamble or immediately after the start-of-frame delimiter field), the sequence number SN is received at the receiver ERX2 during reception of the frame.

Preferably, as soon as the sequence number processor SNP2-RX receives the sequence number SN with its checksum, it preferably checks whether the sequence number SN contains one or more bit errors (step 43). If the sequence number SN contains one or more bit errors, the receiver ERX2 preferably discards the frame (step 44).

If the sequence number SN is correct, the sequence number processor SNP2-RX preferably compares the sequence number SN associated to the currently received frame with the last received error-free sequence number (step 45). If the sequence number processor SNP2-RX determines that the sequence number SN associated to the currently received frame is not equal to the last received error-free sequence number increased by one, it determines that a sequence number MSN is missing, and that the frame associated to the missing sequence number MSN has been lost during transmission or has previously been discarded by the receiver ERX2. Accordingly, the sequence number processor SNP2-RX preferably sends a message to the sequence number processor SNP2-TX, containing the missing sequence number MSN (step 46). The sequence number processor SNP2-TX in turn preferably generates a negative acknowledgement (NACK) message (step 47) containing the missing sequence number MSN and forwards it to the transmitter ETX2. The transmitter ETX2 preferably transmits the NACK message (step 48) over the link EL to the receiver ERX1 of the first transmitting module TX1 of the first interface EI1, in order to request the retransmission of the frame associated to the missing sequence number MSN.

After step 48 (in case during step 45 the sequence number processor SNP2-RX determines that a sequence number is missing) or after step 45 (in case during step 45 the sequence number processor SNP2-RX determines that no sequence number is missing), at step 49, the receiver ERX2 checks whether the payload (and possibly, one or more fields of the header) of the currently received frame contains one or more bit errors by using the frame check sequence of the frame. If the frame is correct, it is forwarded to a further module of the second unit U2. The operation of this further module will not be described, since it is not relevant to the present description.

If, otherwise, the frame contains one or more bit errors, the receiver ERX2 preferably discards the frame (step 50). The sequence number processor SNP2-RX in turn preferably sends a message to the sequence number processor SNP2-TX (step 51) containing the sequence number CSN of the currently received frame that has been just discarded during step 50. The sequence number processor SNP2-TX preferably generates a negative acknowledgement (NACK) message (step 52) containing the sequence number CSN and forwards it to the transmitter ETX2. The transmitter ETX2 preferably transmits the NACK message (step 53) over the link EL to the receiver ERX1 of the first transmitting module TX1 of the first interface EI1, in order to request the retransmission of the frame associated to the sequence number CSN.

For a better understanding of the steps described above, reference is made once more to Figure 6. It is assumed that the three frames shown in Figure 6, P_{N-1}, P_{N} and P_{N+1}, are received in that order at the receiver ERX2 (assuming that the sequence value is increased by 1). Further, it is firstly assumed that the frame P_{N-1} is correctly received, the frame P_{N} is discarded at step 44 (because its sequence number contains one or more erroneous bits), and the frame P_{N+1} is correctly received. When the sequence number processor SNP2-RX reads the sequence number SN of P_{N+1} (whose value is N+1), it compares this value with the last received error-free sequence number (i.e. the sequence number N-1 associated to P_{N-1}, since the sequence number associated to P_{N} is affected by error, and P_{N} has been accordingly discarded by the receiver ERX2). From the result of such comparison, the sequence number processor SNP2-RX determines that the sequence number SN with value N is missing, and accordingly determines that the frame having associated the sequence number with value N has been lost or discarded by the receiver ERX2. Thus, the sequence number processor SNP2-TX issues a NACK message containing the value N of the missing sequence number, in order to request the retransmission of the frame P_{N}, and the transmitter ETX2 transmits the NACK message to the first interface EI1 along the link EL.

Advantageously, the sequence number processor SNP2-RX therefore is capable of determining whether frames are missing from the original sequence of frames transmitted by the first interface EI1 by simply reading the sequence numbers associated to the frames, and comparing each read sequence number with the sequence number read before. This can be advantageously performed by an algorithm implemented in the sequence number processor SNP2-RX. Thus, advantageously, no complex hardware or software is required for implementing these operations.

It is now assumed that the frame P_{N-1} is correctly received, the frame P_{N} is discarded at step 50 (because its payload contains one or more erroneous bits), and the frame P_{N+1} is correctly received. After the frame P_{N} has been discarded, the sequence number processor SNP2-TX issues a NACK message containing the value N, in order to request the retransmission of the frame P_{N}, and the transmitter ETX2 transmits the NACK message to the first interface EI1 along the link EL.

Advantageously, the payload (and, possibly, other field of the header, such as the destination address field and the source address field) of a frame and the associated sequence number SN are checked for errors independently one from the other. The sequence number SN is checked before completely processing the currently received frame and the sequence number processor is capable of detecting a missing sequence number in a fast way, thus speeding up the request of retransmission of previously lost or discarded frames. Moreover, advantageously, if the currently received frame has one or more bit errors (and the frame is accordingly discarded), the sequence number processor is capable of immediately generate a NACK message with the sequence number of the discarded frame and request its retransmission without comparing sequence numbers and thus without waiting for the next frame.

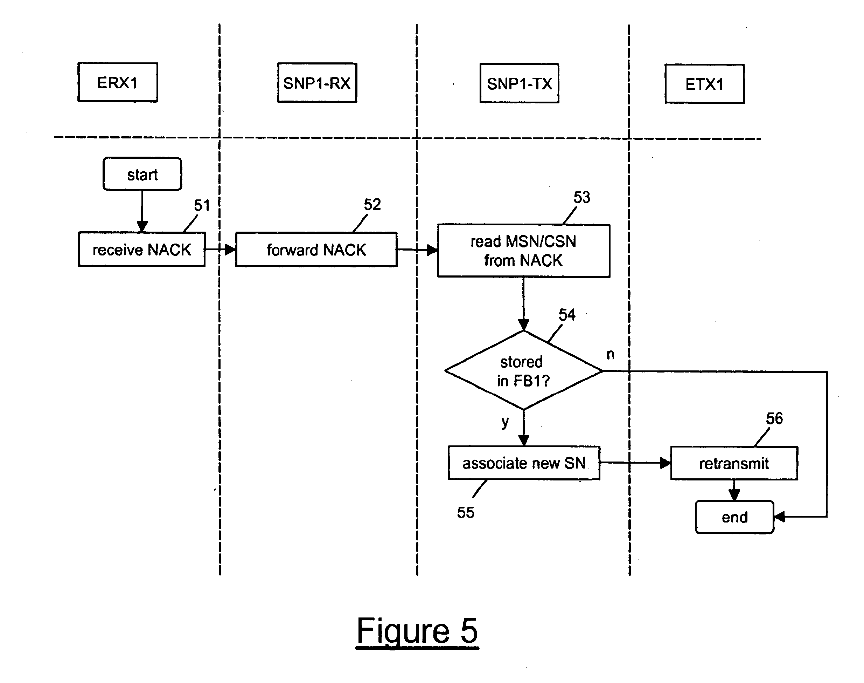

Figure 5 schematically shows a flow chart illustrating the operation of the first interface EI1 when it receives a NACK message from the second interface EI2, according to a preferred embodiment of the present invention.

At step 51, the receiver ERX1 receives the NACK message, which contains the missing sequence number MSN or the sequence number CSN, from the link EL. Preferably, the receiver ERX1 forwards the NACK message through the sequence number processor SNP1-RX (step 52) to the sequence number processor SNP1-TX. The sequence number processor SNP1-TX then reads the sequence number carried by the NACK message (MSN or CSN) (step 53). Then, preferably, the sequence number processor SNP1-TX checks (step 54) whether a frame with an associated sequence number SN equal to the sequence number carried by the NACK message (MSN or CSN) is stored in the buffer B1. If none of the frames stored in the buffer B1 has associated a sequence number equal to the sequence number carried by the NACK message (MSN or CSN), no action is taken and no frame is retransmitted from the first interface EI1 to the second interface EI2. If, however, the sequence number processor SNP1-TX finds in the buffer B1 a frame with an associated sequence number equal to the sequence number carried by the NACK message (MSN or CSN), then preferably the sequence number processor SNP1-TX retrieves a copy of this frame from the buffer B1, associates thereto a new sequence number (step 55), and possibly calculates its checksum. The new sequence number is preferably set to a value that indicates the position that the frame will occupy, when it will be retransmitted, in the sequence of frames to be transmitted over the link EL. During step 55, the sequence number processor SNP1-TX preferably also overwrites in the buffer B1 the original sequence number of the frame (and preferably its checksum) with the new sequence number (and preferably its checksum).

Then, at step 56, the sequence number processor SNP1-TX preferably forwards the copy of the frame retrieved from the buffer B1 and the associated new sequence number (possibly with its checksum) to the transmitter ETX1, that transmits it over the link EL to the second interface EI2. The position of the retransmitted frame in the sequence of frames transmitted by the transmitted ETX1 is the one indicated by the new value of its sequence number.

For a better understanding of step 55, reference is made to Figure 7. It is assumed that the discarded frame P_{N} is stored in the buffer B1 together with its associated sequence number with value N. Upon reception of the NACK message comprising the value of the sequence number of the discarded frame (i.e. N), at step 54, the sequence number processor SNP1-TX determines that the frame P_{N} having associated the sequence number equal to the sequence number of the discarded frame is stored in the buffer B1, and at step 55 accordingly retrieves a copy P'_{N} of the frame P_{N} from the buffer B1 and associates to it a new sequence number indicating the position that the frame (i.e. its copy P'_{N}) will occupy, when it will be retransmitted, in the sequence of frames to be transmitted over the link EL. Assuming that the last frame forwarded by the sequence number processor SNP1-TX to the transmitter ETX1 before step 55 is P_{N+2}, the new sequence number SN associated to the copy P'_{N} of the frame P_{N} is N+3. Moreover, in the buffer B1, the sequence number processor SNP1-TX overwrites the old sequence number N associated to the frame P_{N} with the new sequence number N+3. Then, the sequence number processor SNP1-TX forwards the copy P'_{N} of the frame P_{N} with the new sequence number N+3 to the transmitter ETX1, that transmits it along the link EL to the second interface EI2.

Changing the sequence number of the frame to be retransmitted advantageously allows preserving synchronization between the transmitter ETX1 and the receiver ERX2, while avoiding more complex mechanisms at the receiver ERX2 for checking whether the retransmitted frame has been received. Indeed, if the sequence number of retransmitted frames were not changed as described above, the logic implemented at the receiver ERX2 for determining whether the sequence number of the retransmitted packet is missing should be very complex, since this sequence number would not be correlated to the sequence numbers of the frames transmitted immediately after and before the retransmitted frame. Instead, changing the sequence number as explained above allows the sequence number processor SNP2-RX to detect whether the retransmitted frame is missing in a very simple way, since the sequence numbers received at the receiver ERX2 have monotonically increasing values, possibly comprising missing values that will cause retransmission.

According to preferred embodiments of the invention, each time the first interface EI1 does not receive a data frame (i.e. frames containing user data) to be transmitted over the link EL, the first transmitting module TX1 preferably generates an idle frame and transmits it to the second receiving module RX2. The idle frame has preferably a fixed size and a fixed format.

A sequence number SN is preferably associated to each idle frame, in the same way as it has been described above with reference to data frames. The sequence number SN of each idle frame indicates the position that the frame occupies in the sequence of frames transmitted over the link EL.

As an example, it is assumed that a data frame transmitted by the transmitter ETX1 has a sequence number SN with value N+4. Moreover, it is assumed that after transmission of this data frame, no data frames are transmitted for a given time interval. During this time interval, the transmitter ETX1 transmits a number (namely, two) of idle frames, until transmission of data frames is resumed. According to this example, the sequence number associated to the first idle frame is N+5 and the sequence number associated to the second idle frame is N+6. The first data frame transmitted after the time interval expires then has a sequence number with value N+7. If, at the receiving side, the data frame with sequence number N+4 is lost or discarded, the presence of the idle frame with sequence number N+5 allows determining that the sequence number N+4 is missing, in the same way as it has been described above with reference to Figure 4. Without the presence of idle frames, the missing sequence number would be detected at the reception of a new data frame with a delay depending on the time interval during which data traffic is absent. Thus, transmitting idle frames advantageously allows detecting a missing sequence number with minimum delay. Since the sequence numbers of idle frames are correlated with the sequence numbers of data frames transmitted before and after idle frames, the synchronization between the transmitter ETX1 and the receiver ERX2 is preserved.

The method described above is advantageously implemented at or below MAC layer of the OSI model. In case of Ethernet networks, the sequence number may indeed be inserted in a field of the Ethernet header. This advantageously results in exploiting in a more efficient way the bandwidth available for the delivery of the traffic flows between the two Ethernet interfaces, since no fixed overhead is added to the Ethernet frames.

Advantageously, avoiding use of functionalities of higher layers (e.g. LLC layer) possibly implemented in the units U1 and U2 allows using simple hardware and software modules capable of detecting missing frames on the basis of the sequence number order of the received frames. Besides, advantageously, since the sequence number is added in the frame preamble or in the inter-frame gap, the sequence number processor at the receiving side is capable of detecting a missing frame before the currently received frame is completely processed. This advantageously results in improved speed of processing and in lower delays, which are especially critical when real-time or CES traffic flows are considered.

Moreover, advantageously, the frame error control method of the present invention is service-aware and CoS-aware. This means that the method advantageously allows applying retransmission and thus reducing the frame error rate only to certain types of services which require a lower FER. This advantageously allows avoiding further waste of bandwidth, since no retransmission is provided to packets carrying services which do not require lower FER.

## Claims

1. A method for reducing the frame error rate on an Ethernet link (EL) between a first unit (U1) and a second unit (U2) of a node (ND) of a wireless packet-switched communication network, the first unit (U1) comprising a first interface (EI1) and the second unit (U2) comprising a second interface (EI2), said first interface (EI1) and said second interface (EI2) being Ethernet interfaces, said method comprising:
a) at said first interface (EI1), associating a sequence number (SN) to a frame (P_{N+1}) and transmitting said frame (P_{N+1}) with said sequence number (SN) over said link (EL) to said second interface (EI2), said sequence number (SN) being indicative of a position of said frame (P_{N+1}) in a sequence of frames (P_{N-1}, P_{N}, P_{N+1}) transmitted over said link (EL);
b) at said second interface (EI2), receiving said frame (P_{N+1}), reading said sequence number (SN), using said sequence number (SN) for determining whether a frame (P_{N}) is missing from said sequence of frames (P_{N-1}, P_{N}, P_{N+1}) and, in the affirmative, requesting to said first interface (EI1) retransmission of said missing frame (P_{N}); and
c) at said first interface (EI1), retransmitting said missing frame (P_{N}),
said method being **characterized in that** said associating comprises writing said sequence number (SN) in one or more of the following positions: in a media access control layer header of said frame (P_{N+1}), in an inter-frame gap between said frame (P_{N+1}) and an immediately preceding frame (P_{N}) of said sequence of frames (P_{N-1}, P_{N}, P_{N+1}).

2. The method according to claim 1, wherein said step a) comprises storing at least one frame (P_{N}) of said sequence of frames (P_{N-1}, P_{N}, P_{N+1}) in a buffer (B1) before transmission.

3. The method according to claim 2, wherein said step a) comprises determining a service carried by and/or a class of service associated to a frame of said sequence of frames (P_{N-1}, P_{N}, P_{N+1}) and storing at least one frame (P_{N}) of said sequence of frames (P_{N-1}, P_{N}, P_{N+1}) if said at least one frame carries a predefined service and/or is associated to a predefined class of service.

4. The method according to claims 2 or 3, wherein said using of the sequence number comprises comparing said sequence number (SN=N+1) associated to said frame (P_{N+1}) with a further sequence number (SN=N-1) associated to a previously received frame (P_{N-1}) thus determining whether a sequence number (MSN) is missing between said sequence number (SN=N+1) and said further sequence number (SN=N-1).

5. The method according to claim 4, wherein said requesting retransmission of the missing frame comprises transmitting to said first interface (EI1) a message containing said missing sequence number (MSN).

6. The method according to claim 5, wherein said retransmitting the missing frame comprises checking whether said at least one frame (P_{N}) stored in said buffer (B1) has associated a sequence number equal to said missing sequence number (MSN) and, in the affirmative, retrieving a copy (P'_{N}) of said at least one frame (P_{N}) from said buffer (B1).

7. The method according to claim 6, wherein said retransmitting the missing frame comprises associating to said copy (P'_{N}) a new sequence number indicating the position that said copy (P'_{N}) will occupy, when it will be retransmitted, in a further sequence of frames to be transmitted over said link (EL).

8. The method according any of the preceding claims, wherein said step a) further comprises calculating a checksum of said sequence number (SN) and wherein said using of the sequence number comprises processing said checksum for checking whether said sequence number (SN) is error-free and, in the negative, discarding said frame (P_{N+1}).

9. The method according to any of the preceding claims, wherein said step a) comprises, after transmitting said frame (P_{N+1}), determining whether further frames carrying user traffic have to be transmitted and, in the negative, generating an idle frame, associating a still further sequence number to said idle frame and transmitting said idle frame with said still further sequence number to said second interface (EI2).

10. A transmitting unit (U1) suitable for transmitting frames to a receiving unit (U2) on an Ethernet link (EL) at a node (ND) of a wireless packet-switched communication network, said transmitting unit (U1) comprising a transmitting interface (EI1), said transmitting interface (EI1) being an Ethernet interface and comprising a sequence number processor (SNP1-TX) and a transmitter (ETX1), wherein:
- said sequence number processor (SNP1-TX) is configured to associate a sequence number (SN) to a frame (P_{N+1}), said sequence number (SN) being indicative of a position of said frame (P_{N+1}) in a sequence of frames (P_{N-1}, P_{N}, P_{N+1}) transmitted over said link (EL);
- said transmitter (ETX1) is configured to transmit said frame (P_{N+1}) with said sequence number (SN) over said link (EL) to said receiving unit (U2);
- said sequence number processor (SNP1-TX) is configured to receive from said receiving unit (U2) a request to retransmit a missing frame (P_{N}); and
- said transmitter (ETX1) is configured to retransmit said missing frame (P_{N}),
said transmitting unit (U1) being **characterized in that** said sequence number processor (SNP1-TX) is configured to write said sequence number (SN) in one or more of the following positions: in a media access control layer header of said frame (P_{N+1}), in an inter-frame gap between said frame (P_{N+1}) and an immediately preceding frame (P_{N}) of said sequence of frames (P_{N-1}, P_{N}, P_{N+1}).

11. A receiving unit (U2) suitable for receiving frames from a transmitting unit (EI1) on an Ethernet link (EL) at a node (ND) of a wireless packet-switched communication network, said receiving unit (U2) comprising a receiving interface (EI2), said receiving interface (EI2) being an Ethernet interface and comprising a receiver (ERX2) and a sequence number processor (SNP2-RX), wherein:
- said receiver (ERX2) is configured to receive a frame (P_{N+1}) with an associated sequence number (SN), said sequence number (SN) being indicative of a position of said frame (P_{N+1}) in a sequence of frames (P_{N-1}, P_{N}, P_{N+1}) transmitted over said link (EL);
- said sequence number processor (SNP2-RX) is configured to read said sequence number (SN), using said sequence number (SN) for determining whether a frame (P_{N}) is missing from said sequence of frames (P_{N-1}, P_{N}, P_{N+1}) and, in the affirmative, requesting to said transmitting unit (U1) retransmission of said missing frame (P_{N}),
said receiving unit (U2) being **characterized in that** said sequence number processor (SNP2-RX) is configured to read said sequence number (SN) from one or more of the following positions: in a media access control layer header of said frame (P_{N+1}), in an inter-frame gap between said frame (P_{N+1}) and an immediately preceding frame (P_{N}) of said sequence of frames (P_{N-1}, P_{N}, P_{N+1}).

12. A node (ND) for a packet-switched wireless network comprising a transmitting unit (U1) according to claim 10 and a receiving unit (U2) according to claim 11.

13. A packet-switched wireless network comprising a node according to claim 12.

## Patentansprüche

1. Verfahren zur Reduzierung der Rahmenfehlerrate auf einer Ethernet-Verbindung (EL) zwischen einer ersten Einheit (U1) und einer zweiten Einheit (U2) eines Knotens (ND) eines drahtlosen Paketvermittlungskommunikationsnetzwerks, wobei die erste Einheit (U1) eine erste Schnittstelle (EI1) umfasst und die zweite Einheit (U2) eine zweite Schnittstelle (EI2) umfasst, wobei die besagte erste Schnittstelle (EI1) und die besagte zweite Schnittstelle (EI2) Ethernet-Schnittstellen sind, wobei das besagte Verfahren umfasst:
a) An der besagten ersten Schnittstelle (EI1), Assoziieren einer Sequenznummer (SN) mit einem Rahmen (P_{N-1},) und Übertragen des besagten Rahmens (P_{N}+1) mit der besagten Sequenznummer (SN) über die besagte Verbindung (EL) an die besagte zweite Schnittstelle (EI2), wobei die besagte Sequenznummer (SN) für eine Position des besagten Rahmens (P_{N}+1) in einer Sequenz von über die besagte Verbindung (EL) übertragenen Rahmen (P_{N}-1, P_{N}1, P_{N}+1) indikativ ist,
b) an der besagten zweiten Schnittstelle (EI2), Empfangen des besagten Rahmens (P_{N}+1), Lesen der besagten Sequenznummer (SN), Verwenden der besagten Sequenznummer (SN), um zu ermitteln, ob ein Rahmen (P_{N}) aus der besagten Sequenz von Rahmen (P_{N}-1, P_{N}1, P_{N}+1) fehlt und, wenn dies der Fall ist, Anfordern einer erneuten Übertragung des besagten fehlenden Rahmens (P_{N}) von der besagten ersten Schnittstelle (EI1); und
c) an der besagten ersten Schnittstelle (EI1), erneutes Übertragen des besagten fehlenden Rahmens (P_{N}), wobei das besagte Verfahren **dadurch gekennzeichnet ist, dass** das besagte Assoziieren das Schreiben der besagten Sequenznummer (SN) in eine oder mehrere der folgenden Positionen: In einen Mediazugangssteuerungsschicht-Header des besagten Rahmens (P_{N}+1), in einen Paketabstand zwischen dem besagten Rahmen (P_{N}+1) und einem unmittelbar vorangehenden Rahmen (P_{N}) der besagten Sequenz von Rahmen (P_{N}-1, P_{N}1, P_{N}+1) umfasst.

2. Verfahren nach Anspruch 1, wobei der besagte Schritt a) vor der Übertragung das Speichern mindestens eines Rahmens (P_{N}) der besagten Sequenz von Rahmen (P_{N}-1, P_{N}1, P_{N}+1) in einem Puffer (B1) umfasst.

3. Verfahren nach Anspruch 2, wobei der besagte Schritt a) das Ermitteln eines von dem Rahmen der besagten Sequenz von Rahmen (P_{N}-1, P_{N}1, P_{N}+1) transportierten Dienstes und/oder einer mit einem Rahmen der besagten Sequenz von Rahmen (P_{N}-1, P_{N}1, P_{N}+1) assoziierten Dienstklasse und das Speichern mindestens eines Rahmens (P_{N}) der besagten Sequenz von Rahmen (P_{N}-1, P_{N}1, P_{N}+1), wenn der besagte mindestens eine Rahmen einen vordefinierten Dienst transportiert und/oder mit einer vordefinierten Dienstklasse assoziiert ist, umfasst.

4. Verfahren nach den Ansprüchen 2 oder 3, wobei das besagte Verwenden der Sequenznummer das Vergleichen der besagten mit dem besagten Rahmen (P_{N+1}) assoziierten Sequenznummer (SN=N+1) mit einer weiteren, mit einem zuvor empfangenen Rahmen (P_{N-1}) assoziierten Sequenznummer (SN=N-1) umfasst, um zu ermitteln, ob eine Sequenznummer (MSN) zwischen der besagten Sequenznummer (SN=N+1) und der besagten weiteren Sequenznummer (SN=N-1) fehlt.

5. Verfahren nach Anspruch 4, wobei das besagte Anfordern einer erneuten Übertragung des fehlenden Rahmens das Übertragen einer Nachricht, welche die besagte fehlende Sequenznummer (MSN) enthält, an die besagte erste Schnittstelle (EI1) umfasst.

6. Verfahren nach Anspruch 5, wobei das besagte erneute Übertragen des fehlenden Rahmens das Prüfen, ob mit dem besagten mindestens einen in dem besagten Puffer (B1) gespeicherten Rahmen (P_{N}) eine Sequenznummer assoziiert ist, welche der besagten fehlenden Sequenznummer (MSN) entspricht und, wenn dies der Fall ist, das Abrufen einer Kopie (P'_{N}) des besagten mindestens einen Rahmens (P_{N}) aus dem besagten Puffer (B1) umfasst.

7. Verfahren nach Anspruch 6, wobei das besagte erneute Übertragen des fehlenden Rahmens das Zuordnen einer neuen Sequenznummer, welche die Position angibt, die die Kopie (P'_{N}) bei der erneuten Übertragung in einer weiteren Sequenz von über die besagte Verbindung (EL) zu übertragenden Rahmen belegen wird, zu der besagten Kopie (P'_{N}) umfasst.

8. Verfahren nach einem beliebigen der vorstehenden Ansprüche, wobei der besagte Schritt a) weiterhin das Berechnen einer Prüfsumme der besagten Sequenznummer (SN) umfasst, und wobei das besagte Verwenden der Sequenznummer das Verarbeiten der besagten Prüfsumme umfasst, um zu prüfen, ob die besagte Sequenznummer (SN) fehlerfrei ist und, wenn dies nicht der Fall ist, den besagten Rahmen (P_{N+1}) zu verwerfen.

9. Verfahren nach einem beliebigen der vorstehenden Ansprüche, wobei der besagte Schritt a) nach der Übertragung des besagten Rahmens (P_{N+1}) das Ermitteln, ob weitere Rahmen, welche Benutzerverkehr transportieren, zu übertragen sind und, wenn dies nicht der Fall ist, das Erzeugen eines Leerlaufrahmens, das Zuordnen einer noch weiteren Sequenznummer zu dem besagten Leerlaufrahmen und das Übertragen des besagten Leerlaufrahmens mit der besagten noch weiteren Sequenznummer an die besagte zweite Schnittstelle (EI2) umfasst.

10. Sendeeinheit (U1), geeignet für die Übertragung von Rahmen an eine Empfangseinheit (U2) auf einer Ethernet-Verbindung (EL) an einem Knoten (ND) eines drahtlosen Paketvermittlungskommunikationsnetzwerks, wobei die besagte Sendeeinheit (U1) eine Übertragungsschnittstelle (EI1) umfasst, wobei die besagte Sendeschnittstelle (EI1) eine Ethernet-Schnittstelle ist und einen Sequenznummerprozessor (SNP1-TX) und einen Sender (ETX1) umfasst, wobei:
- der besagte Sequenznummerprozessor (SNP1-TX) dafür konfiguriert ist, eine Sequenznummer (SN) mit einem Rahmen (P_{N}+1) zu assoziieren, wobei die besagte Sequenznummer (SN) für eine Position des besagten Rahmens (P_{N}+1) in einer über die besagte Verbindung (EL) übertragenen Sequenz von Rahmen (P_{N}-1, P_{N}, P_{N}+1) indikativ ist;
- der besagte Sender (ETX1) dafür konfiguriert ist, den besagten Rahmen (PN+1) mit der besagten Sequenznummer (SN) über die besagte Verbindung (EL) an die besagte Empfangseinheit (U2) zu übertragen;
- der besagte Sequenznummerprozessor (SNP1-TX) dafür konfiguriert ist, von der besagten Empfangseinheit (U2) eine Anforderung für die erneute Übertragung eines fehlenden Rahmens (P_{N}) zu empfangen; und
- der besagte Sender (ETX1) dafür konfiguriert ist, den besagten fehlenden Rahmen (P_{N}) erneut zu übertragen,
wobei die besagte Sendeeinheit (U1) **dadurch gekennzeichnet ist, dass** der besagte Sequenznummerprozessor (SNP1-TX) dafür konfiguriert ist, die besagte Sequenznummer (SN) in eine oder mehrere der folgenden Positionen zu schreiben: In einen Mediazugangssteuerungsschicht-Header des besagten Rahmens (P_{N}+1), in einen Paketabstand zwischen dem besagten Rahmen (P_{N}+1) und einem unmittelbar vorangehenden Rahmen (P_{N}) der besagten Sequenz von Rahmen (P_{N}-1, P_{N}1, P_{N}+1).

11. Empfangseinheit (U2), geeignet für den Empfang von Rahmen von einer Sendeeinheit (EI1) auf einer Ethernet-Verbindung (EL) an einem Knoten (ND) eines drahtlosen Paketvermittlungskommunikationsnetzwerks, wobei die besagte Empfangseinheit (U2) eine Empfangsschnittstelle (EI2) umfasst, wobei die besagte Empfangsschnittstelle (EI2) eine Ethernet-Schnittstelle ist und einen Empfänger (ERX2) und einen Sequenznummerprozessor (SNP2-RX) umfasst, wobei:
- der besagte Empfänger (ERX2) dafür konfiguriert ist, einen Rahmen (P_{N}+1) mit einer zugehörigen Sequenznummer (SN) zu empfangen, wobei die besagte Sequenznummer (SN) für eine Position des besagten Rahmens (P_{N}+1) in einer über die besagte Verbindung (EL) übertragenen Sequenz von Rahmen (P_{N}-1, P_{N}, P_{N}+1) indikativ ist;
- der besagte Sequenznummerprozessor (SNP2-RX) dafür konfiguriert ist, die besagte Sequenznummer (SN) zu lesen, die besagte Sequenznummer (SN) für das Ermitteln, ob ein Rahmen (P_{N}) aus der besagten Sequenz von Rahmen (P_{N}-1, P_{N}, P_{N}+1) fehlt, zu verwenden und, wenn dies der Fall ist, von der besagten Sendeeinheit (U1) die erneute Übertragung des besagten fehlenden Rahmens (P_{N}) anzufordern,
wobei die besagte Empfangseinheit (U2) **dadurch gekennzeichnet ist, dass** der besagte Sequenznummerprozessor (SNP2-RX) dafür konfiguriert ist, die besagte Sequenznummer (SN) aus einer oder mehreren der folgenden Positionen zu lesen: In einem Mediazugangssteuerungsschicht-Header des besagten Rahmens (P_{N}+1), in einem Paketabstand zwischen dem besagten Rahmen (P_{N+1}) und einem unmittelbar vorangehenden Rahmen (P_{N}) der besagten Sequenz von Rahmen (P_{N}-1, P_{N}1, P_{N}+1).

12. Knoten (ND) für ein drahtloses Paketvermittlungskommunikationsnetzwerk, umfassend eine Sendeeinheit (U1) gemäß Anspruch 10 und eine Empfangseinheit (U2) gemäß Anspruch 11.

13. Drahtloses Paketvermittlungsnetzwerk, umfassend einen Knoten gemäß Anspruch 12.

## Revendications

1. Procédé de réduction du taux d'erreur de trame sur une liaison Ethernet entre une première unité (U1) et une seconde unité (U2) d'un noeud (ND) d'un réseau de communication sans fil à commutation par paquets, la première unité (U1) comprenant une première interface (EI1) et la seconde unité (U2) comprenant une seconde interface (EI2), ladite première interface (EI1) et ladite seconde interface (EI2) étant des interfaces Ethernet, ledit procédé comprenant les étapes suivantes :
a) au niveau de ladite première interface (EI1), associer un numéro de séquence (SN) à une trame (P_{N+1}) et transmettre ladite trame (P_{N+1}) avec ledit numéro de séquence (SN) sur ladite liaison (EL) à ladite seconde interface (EI2), ledit numéro de séquence (SN) étant indicatif d'une position de ladite trame (P_{N+1}) dans une séquence de trames (P_{N-1}, P_{N1}, P_{N+1}) transmises sur ladite liaison (EL) ;
b) au niveau de ladite seconde interface (EI2), recevoir ladite trame (P_{N+1}) lisant ledit numéro de séquence (SN), utiliser ledit numéro de séquence (SN) pour déterminer si une trame (P_{N}) manque dans ladite séquence de trames (P_{N-1}, P_{N1}, P_{N+1}) et, dans l'affirmative, demander à ladite première interface (EI1) la retransmission de ladite trame manquante (P_{N}) ; et
c) au niveau de ladite première interface (EI1), retransmettre ladite trame manquante (P_{N}), ledit procédé étant **caractérisé en ce que** ladite association comprend l'écriture dudit numéro de séquence (SN) dans une ou plusieurs des positions suivantes : dans un en-tête de la couche de contrôle d'accès au support de ladite trame (P_{N+1}), dans un délai inter-trame entre ladite trame (P_{N+1}) et une trame immédiatement précédente (P_{N}) de ladite séquence de trames (P_{N-1}, P_{N1}, P_{N+1}).

2. Procédé selon la revendication 1, selon lequel ladite étape a) comprend le stockage d'au moins une trame (P_{N}) de ladite séquence de trames (P_{N-1}, P_{N1} P_{N+1}) dans une mémoire tampon (B1) avant la transmission.

3. Procédé selon la revendication 2, selon lequel ladite étape a) comprend la détermination d'un service transporté par et/ou une classe de service associée à une trame de ladite séquence de trames (P_{N-1}, P_{N1} P_{N+1}) et le stockage d'au moins une trame (P_{N}) de ladite séquence de trames (P_{N-1}, P_{N}, P_{N+1}) si ladite au moins une trame transporte un service prédéfini et/ou est associée à une classe de service prédéfinie.

4. Procédé selon les revendications 2 ou 3, selon lequel ladite utilisation du numéro de séquence comprend la comparaison dudit numéro de séquence (SN=N+1) associé à ladite trame (P_{N+1}) avec un autre numéro de séquence (SN=N-1) associé à une trame reçue précédemment (P_{N-1}) déterminant ainsi si un numéro de séquence (MSN) manque entre ledit numéro de séquence (SN=N+1) et ledit autre numéro de séquence (SN=N-1).

5. Procédé selon la revendication 4, selon lequel ladite demande de retransmission de la trame manquante comprend la transmission à ladite première interface (EI1) d'un message contenant ledit numéro de séquence manquant (MSN).

6. Procédé selon la revendication 5, selon lequel ladite retransmission de la trame manquante comprend la vérification si ladite au moins une trame (P_{N}) stockée dans ladite mémoire tampon (B1) a associé un numéro de séquence égal audit numéro de séquence manquant (MSN) et, dans l'affirmative, la récupération d'une copie (P'_{N}) de ladite au moins une trame (P_{N}) dans ladite mémoire tampon (B1).

7. Procédé selon la revendication 6, selon lequel ladite retransmission de la trame manquante comprend l'association à ladite copie (P'_{N}) d'un nouveau numéro de séquence indiquant la position que ladite copie (P'_{N}) occupera, lorsqu'elle sera retransmise, dans une autre séquence de trames à transmettre sur ladite liaison (EL).

8. Procédé selon l'une quelconque des revendications précédentes, selon lequel ladite étape a) comprend en outre le calcul d'une somme de contrôle dudit numéro de séquence (SN) et selon lequel ladite utilisation du numéro de séquence comprend le traitement de ladite somme de contrôle pour vérifier si ledit numéro de séquence (SN) est exempt d'erreur et, dans la négative, la suppression de ladite trame (P_{N+1}).

9. Procédé selon l'une quelconque des revendications précédentes, selon lequel ladite étape a) comprend, après la transmission de ladite trame (P_{N+1}), la détermination si d'autres trames transportant le trafic utilisateur doivent être transmises et, dans la négative, la génération d'une trame inactive, l'association d'un encore autre numéro de séquence à ladite trame inactive et la transmission de ladite trame inactive avec ledit encore autre numéro de séquence à ladite seconde interface (EI2).

10. Unité de transmission (U1) adaptée pour transmettre des trames à une unité de réception (U2) sur une liaison Ethernet (EL) au niveau d'un noeud (ND) d'un réseau de communication sans fil à commutation par paquets, ladite unité de transmission (U1) comprenant une interface de transmission (EI1), ladite interface de transmission (EI1) étant une interface Ethernet et comprenant un processeur de numéros de séquence (SNP1-TX) et un émetteur (ETX1), selon laquelle :
- ledit processeur de numéros de séquence (SNP1-TX) est configuré pour associer un numéro de séquence (SN) à une trame (P_{N+1}), ledit numéro de séquence (SN) étant indicateur d'une position de ladite trame (P_{N+1}) dans une trame de séquences (P_{N-1}, P_{N}, P_{N+1}) transmise sur ladite liaison (EL) ;
- ledit émetteur (ETX1) est configuré pour transmettre ladite trame (P_{N+1}) avec ledit numéro de séquence (SN) sur ladite liaison (EL) à ladite unité de réception (U2) ;
- ledit processeur de numéros de séquence (SNP1-TX) est configuré pour recevoir depuis ladite unité de réception (U2) une demande de retransmission d'une trame manquante (PN) ; et ledit émetteur (ETX1) est configuré pour retransmettre ladite trame manquante (P_{N}),
- ladite unité de transmission (U1) étant **caractérisée en ce que** ledit processeur de numéros de séquence (SNP1-TX) est configuré pour écrire ledit numéro de séquence (SN) dans une ou plusieurs des positions suivantes : dans un en-tête de la couche de contrôle d'accès au support de ladite trame (P_{N+1}), dans un délai inter-trame entre ladite trame (P_{N+1}) et une trame immédiatement précédente (P_{N}) de ladite séquence de trames (P_{N-1}, P_{N1} P_{N+1}).

11. Unité de réception (U2) adaptée pour recevoir des trames depuis une unité de transmission (EI1) sur une liaison Ethernet (EL) au niveau d'un noeud (ND) d'un réseau de communication sans fil à commutation par paquets, ladite unité de réception (U2) comprenant une interface de réception (EI2), ladite interface de réception (EI2) étant une interface Ethernet et comprenant un récepteur (ERX2) et un processeur de numéros de séquence (SNP2-RX), selon laquelle :
- ledit récepteur (ERX2) est configuré pour recevoir une trame (P_{N+1}) avec un numéro de séquence associé (SN), ledit numéro de séquence (SN) étant indicateur d'une position de ladite trame (P_{N+1}) dans une trame de séquences (P_{N-1}, P_{N}, P_{N+1}) transmise sur ladite liaison (EL) ;
- ledit processeur de numéros de séquence (SNP2-RX) est configuré pour lire ledit numéro de séquence (SN), utilisant ledit numéro de séquence (SN) pour déterminer si une trame (P_{N}) manque dans ladite séquence de trames (P_{N-1}, P_{N}, P_{N+1}) et, dans l'affirmative, demander à ladite unité de transmission (U1) la retransmission de ladite trame manquante (P_{N}), ladite unité de réception (U2) étant **caractérisée en ce que** ledit processeur de numéros de séquence (SNP2-RX) est configuré pour lire ledit numéro de séquence (SN) depuis une ou plusieurs des positions suivantes : dans un en-tête de la couche de contrôle d'accès au support de ladite trame (P_{N+1}), dans un délai inter-trame entre ladite trame (P_{N+1}) et une trame immédiatement précédente (P_{N}) de ladite séquence de trames (P_{N-1}, P_{N1} P_{N+1})

12. Noeud (ND) pour un réseau sans fil à commutation par paquets comprenant une unité de transmission (U1) selon la revendication 10 et une unité de réception selon la revendication 11.

13. Réseau sans fil à commutation par paquets comprenant un noeud selon la revendication 12.
